# EUROPÄISCHE PATENTSCHRIFT

(11) **EP 1 032 066 B1**
(45) Veröffentlichungstag und Bekanntmachung des Hinweises auf die Patenterteilung: **13.02.2002**
(21) Anmeldenummer: 99124370.0
(22) Anmeldetag: 07.12.1999
(51) Int. Cl.: H01M 8/06, H01M 8/02, H01M 8/04

(54) **Brennstoffzellensystem**
Fuel cell system
Système de piles à combustible

(30) Priorität: 25.02.1999 DE 19908099
(43) Veröffentlichungstag der Anmeldung: 30.08.2000
(73) Patentinhaber: DaimlerChrysler AG, 70567 Stuttgart (DE)
(72) Erfinder: Lamm, Arnold, Dr., 89275 Elchingen (DE); Wiesheu, Norbert, 89312 Günzburg (DE)

(56) Entgegenhaltungen:
- EP-A- 0 741 428
- DE-A- 19 629 084
- DE-A- 19 701 560
- PATENT ABSTRACTS OF JAPAN vol. 005, no. 171 (E-080), 30. Oktober 1981 (1981-10-30) & JP 56 097972 A (HITACHI LTD), 7. August 1981 (1981-08-07)

## Beschreibung

Die Erfindung betrifft ein Brennstoffzellensystem mit einem Anodenraum und einem Kathodenraum, die durch eine protonenleitende Membran voneinander getrennt sind.

Zur Zeit ist zur Verstromung von flüssigen Energieträgern in einem Brennstoffzellensystem mit Protonenaustauschermembran (PEM-Brennstoffzelle) weltweit schwerpunktmäßig die Reformierung von Methanol in einem Gaserzeugungssystem vorgesehen. Dabei wird ein Wasser/Methanol-Gemisch verdampft und in einem Reformer zu Wasserstoff, Kohlendioxid und Kohlenmonoxid umgesetzt. Verdampfung und Reformierung sind hinsichtlich des energetischen Umsatzes sehr aufwendig. Dies hat Wirkungsgradverluste für das Gesamtsystem zur Folge. Darüber hinaus sind Gasaufbereitungsschritte zur Reinigung des Reformierungsgases notwendig. Das gereinigte Gas wird dann dem PEM-Brennstoffzellensystem zugeführt.

Ein weiteres Problem stellt der Wassereinsatz für die Reformierung dar. Das auf der Kathodenseite anfallende Produktwasser reicht zur Deckung des Wasserhaushaltes nicht aus. Hierdurch wird ein separater Wassertank notwendig.

Aus der DE 197 01 560 A1 ist ein gattungsgemäßes mit einem flüssigen Brennmittel/Kühlmittelgemisch beaufschlagtes Brennstoffzellensystem bekannt. Im Anodenkreislauf ist ein Gasabscheider zum Abtrennen von Kohlendioxid aus dem Brennmittel/Kühlmittelgemisch und eine Umwälzpumpe vorgesehen. Weiterhin ist eine Vorrichtung zum Zudosieren von Brennmittel in den Anodenkreislauf vorgesehen. Im Abscheidegasstrom des Gasabscheiders ist stromab eines weiteren Gasabscheiders ein Kühler vorgesehen. Das Sauerstoff und Wasserdampf umfassende Kathodenabgas des bekannten Brennstoffzellensystems wird durch einen Wasserabscheider geleitet, wobei das abgeschiedene Wasser dem Anodenkreislauf zugeführt wird.

Ausgehend hiervon liegt der Erfindung die Aufgabe zugrunde, ein Brennstoffzellensystem mit protonenleitender Membran mit verbessertem Gesamtwirkungsgrad bereitzustellen.

Zur Lösung dieser Aufgabe wird erfindungsgemäß ein Brennstoffzellensystem mit den Merkmalen des Anspruchs 1 vorgeschlagen.

Durch den erfindungsgemäßen Betrieb des Anodenkreislaufes bei einem Betriebsdruck von mindestens 2,5 bara und durch die Beaufschlagung des Kühler mit einem Umgebungstemperatur aufweisenden Medium und dem dadurch bedingten maximalen Temperaturgefälle wird möglichst viel Wasser beziehungsweise Brennmittel aus dem heißen, dampfreichen Anodenabgas zurückgewonnen und damit der Gesamtwirkungsgrad des Brennstoffzellensystems optimiert.

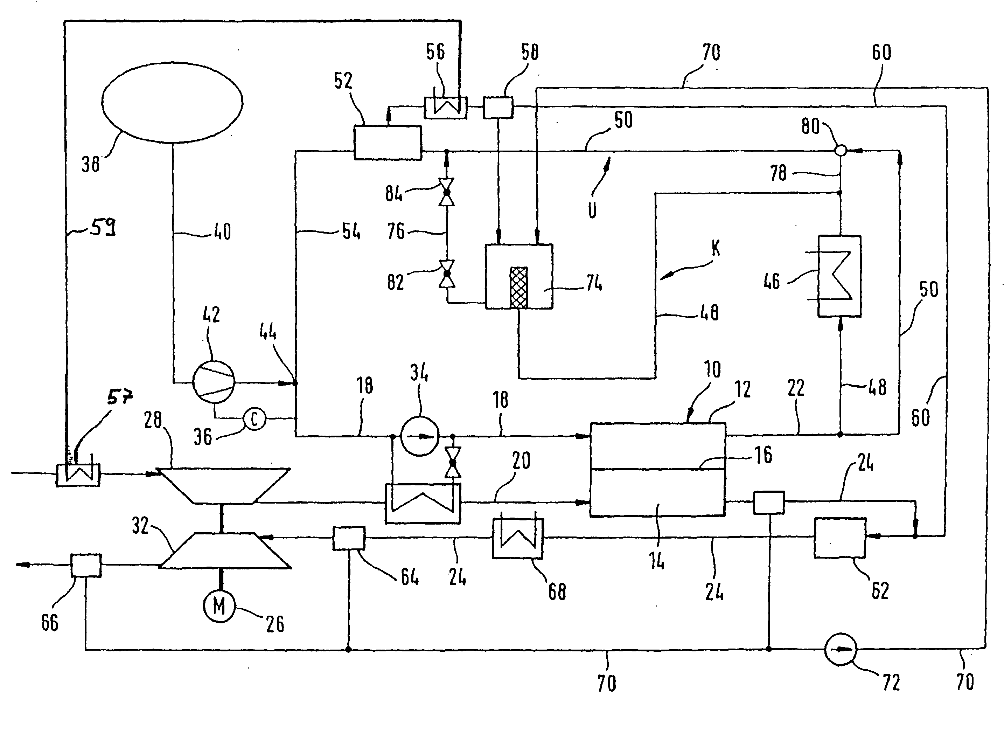

Weitere Vorteile und Ausgestaltungen gehen aus den Unteransprüchen und der Beschreibung hervor. Die Erfindung wird anhand eines Ausführungsbeispieles in der Zeichnung schematisch dargestellt und im folgenden unter Bezugnahme auf die Zeichnung näher erläutert.

Die einzige Figur zeigt in schematischer Darstellung den Prinzipaufbau eines erfindungsgemäßen Brennstoffzellensystems.

Das in der Figur dargestellte Brennstoffzellensystem umfaßt eine Brennstoffzelle 10, die aus einem Anodenraum 12 und einem Kathodenraum 14 besteht, die durch eine protonenleitende Membran 16 voneinander getrennt sind. Über eine Anodenzuleitung 18 wird dem Anodenraum 12 ein flüssiges Kühlmittel/Brennstoff-Gemisch zugeführt. Als Brennstoff kann hierbei jede bei Zimmertemperatur flüssige und elektrochemisch oxidierbare Substanz mit der allgemeinen Strukturformel H -[-*CH*₂*o*-]_{*n*}-*Y* mit 1≤*n*≤5 und Y=H oder Y=CH₃ verwendet werden. Das Brennstoffzellensystem des dargestellten Ausführungsbeispieles wird mit flüssigem Methanol als Brennstoff und Wasser als Kühlmittel betrieben. Obwohl im folgenden nur noch die Verwendung eines Wasser/Methanol-Gemisches beschrieben wird, soll der Schutzbereich dieser Anmeldung jedoch nicht auf dieses Ausführungsbeispiel beschränkt sein. Als Kühlmittel kommen insbesondere auch Flüssigkeiten oder ionische beziehungsweise nicht-ionische Zusätze zum Wasser mit guten Frostschutzeigenschaften in Frage. Bei den möglichen Brennstoffen handelt es sich beispielsweise um verzweigte Varianten obiger allgemeiner Formel, wie zum Beispiel Di- oder Trimethoxymethan.

In den Kathodenraum 14 wird über eine Kathodenzuleitung 20 ein sauerstoffhaltiges Gas geleitet. Gemäß dem dargestellten Ausführungsbeispiel wird hierzu Umgebungsluft verwendet. In der Brennstoffzelle 10 wird der Brennstoff an der Anode oxidiert, der Luftsauerstoff an der Kathode reduziert. Hierzu wird die protonenleitende Membran 16 auf den entsprechenden Oberflächen mit geeigneten Katalysatoren beschichtet. Von der Anodenseite können nun Protonen durch die protonenleitende Membran 16 wandern und sich an der Kathodenseite mit den Sauerstoffionen zu Wasser verbinden. Bei dieser elektrochemischen Reaktion entsteht zwischen den beiden Elektroden eine Spannung. Durch Parallel- beziehungsweise Hintereinanderschaltung vieler solcher Zellen zu einem sogenannten Stack können Spannungen und Stromstärken erreicht werden, die zum Antrieb eines Fahrzeugs ausreichen.

Als Produkt entsteht am Anodenausgang ein mit Wasser und Methanol angereichertes Kohlendioxidgas. Dieses Flüssigkeits-/Gasgemisch wird über eine Anodenableitung 22 aus dem Anodenraum 12 abgeführt. Die Restsauerstoff und Wasserdampf enthaltende Kathodenabluft wird über eine Kathodenabgasleitung 24 abgeführt. Um einen guten Wirkungsgrad zu erhalten, wird die Umgebungsluft im Kathodenraum 14 mit Überdruck bereitgestellt. Hierzu ist in der Kathodenzuleitung 20 ein mit Hilfe eines Elektromotors 26 angetriebener Kompressor 28 angeordnet, der den gewünschten Luftmassenstrom ansaugt und auf das erforderliche Druckniveau verdichtet. Beim Betrieb mit Umgebungsluft wird außerdem vorzugsweise im Eintrittsbereich der Kathodenzuleitung 20 stromauf des Kompressors 28 ein nicht dargestellter Luftfilter vorgesehen. Ein Teil der für die Komprimierung der Umgebungsluft benötigten Energie kann mit Hilfe eines in der Kathodenabgasleitung 24 angeordneten Expanders 32 zurückgewonnen werden. Vorzugsweise sind der Kompressor 28, der Expander 32 und der Elektromotor 26 auf einer gemeinsamen Welle angeordnet. Die Regelung der Brennstoffzellenleistung erfolgt durch Steuerung oder Regelung der Kompressordrehzahl und damit des zur Verfügung stehenden Luftmassenstromes.

Auf der Anodenseite wird das Wasser/Methanol-Gemisch mit Hilfe einer Pumpe 34 bei einem vorgegebenen Druck zirkuliert, um an der Anode ständig ein Überangebot an Brennstoff zu gewährleisten. Erfindungsgemäß wird der Anodenkreislauf mit erhöhtem Druck, das heißt > 2,5 bara, betrieben. Das Verhältnis von Wasser zu Methanol in der Anodenzuleitung 18 wird mit Hilfe eines Sensors 36 eingestellt, der die Methanolkonzentration in der Anodenzuleitung 18 mißt. In Abhängigkeit von diesem Sensorsignal erfolgt dann eine Konzentrationsregelung für das Wasser/Methanol-Gemisch, wobei das flüssige Methanol aus einem Methanoltank 38 über eine Methanolzuführungsleitung 40 zugeführt und mit Hilfe einer nicht näher gezeigten Einspritzdüse 44 in die Anodenzuleitung 18 eingespritzt wird. Der Einspritzdruck wird durch eine in der Methanolzuführungsleitung 40 angeordnete Einspritzpumpe 42 erzeugt. Dem Anodenraum 12 wird somit ständig ein Wasser/Methanol-Gemisch mit konstanter Methanolkonzentration zugeführt.

Aus dem durch die Anodenableitung 22 abgeführten Flüssigkeits-/Gasgemisch muß nun das mit Methanol- und Wasserdampf angereicherte Kohlendioxid abgetrennt werden. Dazu ist beispielsweise eine Aufteilung des Anodenkreislaufes in einen Umwälzkreis U und einen Kühlkreis K möglich. In dem dargestellten Ausführungsbeispiel teilt sich hierzu die Anodenableitung 22 in eine Kühlleitung 48 und eine Umwälzleitung 50.

Die Umwälzleitung 50 führt zu einem Gasabscheider 52, in welchem das Kohlendioxid abgetrennt wird. Das in dem Gasabscheider 52 verbleibende Wasser/Methanol-Gemisch wird über eine Leitung 54 in die Anodenzuleitung 18 zurückgeführt.

Das in dem Gasabscheider 52 abgetrennte feuchte Kohlendioxidgas wird in einem Kühler 56 auf eine möglichst niedrige Temperatur abgekühlt und in einem nachgeordneten Wasserabscheider 58 wird weiteres Methanol und Wasser auskondensiert. Das verbleibende trockene Kohlendioxid mit einem geringen Gehalt an Restmethanol wird über eine Leitung 60 der Kathodenabgasleitung 24 zugeführt, wo es mit der sauerstoffreichen Kathodenabluft vermischt und in einem in der Kathodenabgasleitung 24 stromab der Einmündung der Leitung 60 angeordneten Abgaskatalysator 62 zu Kohlendioxid und Wasserdampf umgesetzt wird. Um zumindest einen Teil des Wasserdampfes als Wasser aus der Kathodenabluft abzutrennen, sind stromauf und stromab des Expanders 32 zwei weitere Wasserabscheider 64, 66 in der Kathodenabgasleitung 24 angeordnet. Hierbei dient der Expander 32 als kompakte Kondensationsturbine, an deren Ausgang wiederum ein Teil des Wasserdampfes auskondensiert. Zusätzlich wird die Kathodenabluft im Anschluß an den Abgaskatalysator 62 mit Hilfe eines Wärmetauschers 68 und eines dem Wärmetauscher 68 zugeordneten, nicht näher dargestellten Temperatursensors auf ein vorgegebenes Temperaturniveau heruntergekühlt. Erst durch diese Kombination von Temperaturregelung und Kondensationsturbine kann ein positiver Wasserhaushalt des Gesamtsystems gewährleistet werden. Das in den Wasserabscheidern 64, 66 gesammelte Wasser wird anschließend über eine Rückspeiseleitung 70 mit integrierter Rückspeisepumpe 72 in den noch zu beschreibenden Kühlkreis zurückgeleitet.

In dem Kühlkreis K ist stromab des Anodenausganges in der Kühlleitung 48 ein Kühler 46 zum Kühlen des Flüssigkeits-/Gasgemisches vorgesehen. Der Ausgang des Kühlers ist über eine Weiterführung der Kühlleitung 48 an einen Ionentauscher 74 angeschlossen. Der Ionentauscher 74 dient zum Sammeln und Reinigen des von dem Kühler 64 sowie von dem Wasserabscheider 58 kommenden Wasser/Methanol-Gemisches sowie des über die Rückspeiseleitung 70 in den Kühlstrom zurückgeleiteten kathodenseitig angefallenen Produktwassers. Der Ausgang des Ionentauschers 74 ist über eine Leitung 76 stromauf des Gasabscheiders 52 der Umwälzleitung 50 zugeführt, wobei in der Leitung 76 in Strömungsrichtung ein. Rücksperrventil 82 und ein Handventil 84 vorgesehen sind.

Über die Leitung 50 des Umwälzkreises U wird das Gemisch dem Gasabscheider 52 zugeführt, wo wie vorstehend beschrieben das Kohlendioxidgas abgeschieden wird. Das verbleibende Wasser/Methanol-Gemisch wird über die Leitung 50 der Anodenzuleitung 18 wieder zugeführt, wobei über die Einspritzpumpe 42 neues Methanol eingespritzt wird. Nach Erreichen der Betriebstemperatur wird das Thermostatventil 80 in Abhängigkeit der am Eingang des Anodenraumes 12 gemessenen Temperatur derart geschaltet, daß ein gegebener Anteil des Flüssigkeits-/Gasgemisches durch den Kühlkreis K und den Kühler 46 läuft.

Das dem Ionentauscher 74 nachgeschaltete Handventil 84 wird so eingestellt, daß ein bestimmter Anteil (beispielsweise 10%) des durch den Kühler 46 fließenden Gemisches durch den Ionentauscher 74 geleitet wird. Der restliche Anteil des Gemisches wird nach dem Kühler 46 über das Thermostatventil 80 dem Gasabscheider zugeführt.

Um den Kühler 56 möglichst effizient betreiben zu können muß er mit möglichst hohem Temperaturgefälle betrieben werden. Hierzu wird er erfindungsgemäß mit einem Umgebungstemperatur aufweisenden Medium gekühlt. Vorzugsweise wird der Kühler 56 daher mit Umgebungsluft beaufschlagt. Dies kann zum einen dadurch erfolgen, daß er mit Hilfe des in die Kathodenzuleitung zugeführten sauerstoffhaltigen Gases gekühlt wird, wie es in der Zeichnung durch den in der Kathodenzuleitung 20 eingangsseitig angeordneten Kühler 57 und die Verbindungsleitung 59 schematisch dargestellt ist. Wird das System in ein Fahrzeug, beispielsweise ein mit Hilfe von Brennstoffzellen betriebenes Elektrofahrzeug, integriert, so kann der Kühler 56 jedoch auch in den üblichen Fahrzeugkühlkreislauf integriert und somit mit der Umgebungsluft beaufschlagt werden.

## Patentansprüche

1. Brennstoffzellensystem mit einem Anodenraum (12) und einem Kathodenraum (14), die durch eine protonenleitende Membran (16) voneinander getrennt sind, mit einer Kathodenzuleitung (20) zur Zufuhr von sauerstoffhaltigem Gas zum Kathodenraum (14), einer Anodenzuleitung (18) zur Zufuhr eines flüssigen Kühlmittel/Brennstoff-Gemisches zum Anodenraum (12), wobei der Anodenraum (12) in einem einen Gasabscheider (52) und eine Pumpe (34) umfassenden Anodenkreislauf angeordnet ist, und wobei im Abscheidegasstrom des Gasabscheiders (52) in Strömungsrichtung ein Kühler (56) und ein Wasserabscheider (58) angeordnet sind,
**dadurch gekennzeichnet, daß** der Anodenkreislauf einen Betriebsdruck von mindestens 2,5 bara aufweist und daß der Kühler (56) mit einem Umgebungstemperatur aufweisenden Medium gekühlt wird.

2. Brennstoffzellensystem nach Anspruch 1,
**dadurch gekennzeichnet, daß** der Kühler (56) mit Hilfe des in die Kathodenzuleitung (20) zugeführten sauerstoffhaltigen Gases gekühlt wird.

3. Brennstoffzellensystem nach Anspruch 1,
**dadurch gekennzeichnet,**
**daß** es in einem Fahrzeug angeordnet ist und daß der Kühler (56) in den Fahrzeugkühlkreislauf integriert ist.

## Claims

1. Fuel cell system with an anode chamber (12) and a cathode chamber (14) which are separated from each other through a proton-conducting diaphragm (16), with a cathode supply pipe (20) for supplying oxygen-containing gas to the cathode chamber (14), and with an anode supply pipe (18) for supplying a fluid coolant/fuel mixture to the anode chamber (12), wherein the anode chamber (12) is mounted in an anode circuit comprising a gas separator (52) and a pump, and wherein a condenser (56) and a water separator (58) are mounted in the flow direction in the separating gas flow of the gas separator (52),
**characterised in that** the anode circuit has an operating pressure of at least 2.5 bar and that the condenser (56) is cooled with a medium having atmospheric temperature.

2. Fuel cell system according to claim 1 **characterised in that** the condenser (56) is cooled by means of the oxygen-containing gas supplied to the cathode supply pipe (20).

3. Fuel cell system according to claim 1 **characterised in that** it is mounted in a vehicle and that the condenser (56) is integrated in the vehicle cooling circuit.

## Revendications

1. Système de pile à combustible comportant un espace anodique (12) et un espace cathodique (14), qui sont séparés l'un de l'autre par une membrane (16) conductrice pour les protons, et comportant une canalisation d'amenée cathodique (20) pour amener du gaz contenant de l'oxygène à l'espace cathodique (14), une canalisation d'amenée anodique (18) pour amener un mélange fluide de refroidissement/combustible liquide à l'espace anodique (12), l'espace anodique (12) étant disposé dans un circuit anodique, qui comprend un séparateur de gaz (52) et une pompe (34), et dans lequel un radiateur (56) et un séparateur d'eau (58) sont disposés dans le courant de gaz de séparation du séparateur de gaz (51) dans la direction de l'écoulement, **caractérisé en ce que** le circuit anodique comporte une pression de fonctionnement égale au moins à 2,5 bars et que le radiateur (58) est refroidi avec un fluide situé à la température ambiante.

2. Système de pile à combustible selon la revendication 1, **caractérisé en ce que** le radiateur (56) est refroidi au moyen du gaz contenant de l'oxygène, qui est amené dans la canalisation d'amenée cathodique (20).

3. Système de pile à combustible selon la revendication 1, **caractérisé en ce qu'**il est disposé dans un véhicule et que le radiateur (56) est intégré dans le circuit de refroidissement du véhicule.
